# EUROPEAN PATENT SPECIFICATION

(11) **EP 2 419 385 B1**
(45) Date of publication and mention of the grant of the patent: **07.08.2019**
(21) Application number: 10764736.4
(22) Date of filing: 01.04.2010
(51) Int. Cl.: C02F 11/04, C10L 3/10, G01F 3/26, G01F 3/30, G01N 33/00

(54) **SYSTEM SETUP AND METHOD FOR BIOLOGICAL METHANE POTENTIAL TEST AND USE OF THE SYSTEM SETUP**
SYSTEMKONFIGURATION UND VERFAHREN FÜR EINEN TEST AUF POTENTIALE FÜR BIOLOGISCHES METHAN UND VERWENDUNG DER SYSTEMKONFIGURATION
INSTALLATION DE SYSTÈME ET PROCÉDÉ DE TEST POTENTIEL DE MÉTHANES BIOLOGIQUES ET UTILISATION DE L'INSTALLATION DE SYSTÈME

(30) Priority: 14.04.2009 SE 0950240; 14.04.2009 US 202860 P
(43) Date of publication of application: 22.02.2012
(60) Divisional application: 19162072.3
(73) Proprietor: Bioprocess Control Sweden AB, 223 63 Lund (SE)
(72) Inventor: LIU, Jing, S-226 48 Lund (SE)
(74) Representative: AWA Sweden AB
(86) International application number: PCT/SE2010/050372
(87) International publication number: WO 2010/120230

(56) References cited:
- DE-A1- 4 006 508
- GB-A- 1 052 759
- JP-A- S5 969 195
- JP-A- 59 069 195
- JP-A- 2006 205 135
- JP-A- 2008 255 209
- JP-A- 2008 255 209
- US-A- 4 064 750
- US-A- 5 325 725
- US-A- 5 325 725
- US-A- 5 500 306
- US-A1- 2004 086 608
- US-B1- 6 299 774
- VALCKE D ET AL: "A PRACTICAL METHOD TO ESTIMATE THE ACETOCLASTIC METHANOGENIC BIOMASS IN ANAEROBIC SLUDGES", JOURNAL - WATER POLLUTION CONTROL FEDERATION, THE FEDERATION, WASHINGTON, DC, US, vol. 55, 1 September 1983 (1983-09-01), pages 1191-1195, XP008032694, ISSN: 0043-1303
- OWEN W F ET AL: "BIOASSAY FOR MONITORING BIOCHEMICAL METHANE POTENTIAL AND ANAEROBIC TOXICITY", WATER RESEARCH, ELSEVIER, AMSTERDAM, NL, vol. 13, no. 6, 1 January 1979 (1979-01-01), pages 485-492, XP001194489, ISSN: 0043-1354, DOI: 10.1016/0043-1354(79)90043-5

## Description

### Technical Field

The present invention relates to a system setup for carrying out a biological methane potential and to a system setup for measuring biomethane gas in a biogas flow.

### Background of biological methane potential (BMP) test

Utilization of biogas as an energy carrier has been recognized as one realistic way to negate the necessity for fossil-fuel based energy, exerting less impact on the environment (CO₂ neutral) and natural resources. Due to the increasing demand in production and utilisation of biogas for energy purpose in recent years, various process optimization approaches have been developed to enhance biomethanisation process for energy recovery. The concept of co-digestion and exploiting energy crops for biogas production has become popular methodologies across Europe and rest of the world. Here, a main waste stream, such as manure from animal farms, can be treated together with other organic wastes at centralised large-scale facilities. To secure a sufficient biomass resource for energy recovery, biogas production from different field crops are also evaluated for screening the one with the highest net energy yields per hectare in the region. With this development trend and the widespread application of anaerobic digestion (AD) for biogas production, there is an increasing need for rapid and highly automated methods for evaluating various feedstock and optimizing the anaerobic fermentation process. Typical investigations include determination of feedstock biodegradability, sludge activity, assessment of inhibition levels of toxic compounds and assessment of kinetic constants. Many of these investigations are performed in closed vessels incubated under varying conditions, and methane production is then used to indicate the biological activity of each batch.

Anaerobic biodegradability assays (i.e. biological methane potential tests) are used to establish anaerobic biodegradability for determination of the ultimate methane potential of wastes or biomass, as well as the biodegradation rate. Methods based on product formation measure the gaseous end product (biogas) have been developed and reported as standards protocols with variety of experimental setups. Valcke et al. (J. Water Pollution Control Federation, vol. 55, 09/1983, p.1191) discloses an apparatus for estimating the methanogenic biomass in anaerobic sludges. The apparatus includes a digester, a CO₂ trap, and a liquid displacement flow measuring means.

The normal procedure when determining the methanogenic activity is to inoculate a number of vials containing small amount of the target media with an anaerobic inoculums, place them in a water bath or incubator with control of the incubation temperature, and periodically check for the methane produced by manually analyzing the volume of gas released and gas composition using chromatography. However, the above analytical procedure not only requires expensive laboratory equipment (e.g. gas chromatography), but also is very time- and labour-consuming due to the large number of vials usually employed and fairly long incubation period (e.g. over one month). The produced biogas and methane content can only be measured occasionally in manual mode, making it impossible to obtain satisfactory data for the degradation dynamic. Furthermore, it is also difficult to perform the test satisfactorily within the normal working routine of a laboratory. Certainly, there is a need for highly automated methane potential tests in such a way that much better data quality can be obtained, less labour-intensive and no expensive laboratory equipment, such as a gas chromatograph, shall be needed for performing the tests.

From the biogas producers' point of view, understanding the potential of a substrate to produce methane and its dynamic degradation profile has a significant impact on the choice of organic waste/material to digest when producing biogas, as well as awareness of the quality of the raw gas produced from a biogas production facility. The latter has in turn an impact on the total volume of upgraded bio-methane that can be produced from a commercial biogas site. Thus, understanding the methane potential of a substrate can have a direct bearing on the profitability of a commercial biogas producer, as well as potential volume of bio-methane produced.

One of the objects of the present invention is to provide a system setup for carrying out BMP test which gives high measurement accuracy, reduces workload and time, and does not need expensive instrumentation and equipment.

### Summary of the Invention

The object above is solved by a system setup for carrying out an automated BMP test of a biosample. The system setup of the present invention is defined in claim 1.

According to the present invention, the biomethane content is separated from the biogas mixture by chemical irreversible fixation of at least carbon dioxide and dihydrogen sulphide. This is made in the container for chemical irreversible fixation. The chemical fixation is made under moderate conditions with reference to inter alia temperature. Moreover, strong chemicals used for extreme conditions are not used according to the present invention. After the fixation, the biomethane gas is flowed to the measuring device or measuring device system according to the present invention. An additional measuring device for analysing the composition or an additional sensor is not of great interest in this case due to the chemical irreversible fixation, but such an additional device or sensor for measuring gas composition may be provided after the digester and before the measuring device or measuring device system, such as before or after the chemical irreversible fixation step, according to the present invention.

### Brief description of the drawing

Fig. 1 is an illustration of a process for an automated methane potential test according to the present invention.
Fig. 2 is an illustration of one example of a measuring device system or flow cells array which may be comprised in a system setup according to the present invention.

### Detailed description of the invention

Specific embodiments according to the present invention will be disclosed below.

Another object of the present invention is to provide a system setup for measuring biomethane gas in a biogas flow, which system setup also have the advantages described above, such as having simple construction and enabling direct and continuous measurement of formed methane.

This object is solved according to one specific embodiment of the present invention, where there is provided a system setup for measuring biomethane gas in a biogas flow, the system setup comprising:
- at least one container for chemical fixation of other gases than biomethane gas, the other gases being at least CO₂, wherein the chemical fixation is based on irreversible reaction(s); and
- at least one gas flow measuring device;
wherein the at least one container for chemical irreversible fixation is connected to said at least one gas flow measuring device.

When separating biomethane in a produced biogas flow, the CO₂ gas is the most important gas to fixate due to the great production thereof during fermentation of a biomaterial. As may be understood from above, other gases besides CH₄ (methane) and CO₂ (carbon dioxide) may also be produced. One of these gases is H₂S (hydrogen sulphide), which is also fixated due to chemically irreversible reaction under moderate condition, when present, according to the system of the invention. It is according to the present invention also possible to fixate other gases, but then the fixating step has to be altered somewhat. Other possible gases being produced normally in small amounts are above all NH₃, but possibly also H₂ in really small amounts.

The wet space disclosed above is a liquid bath, e.g. containing water. Due to the chemical irreversible fixation of other gases than biomethane, such as CO₂ and H₂S, only methane gas is flowed into the measuring device according to the present invention. As explained above, small amounts of other gases may also be present, such as NH₃. This gas may also be fixated-/removed according to the present invention. However, a gas like NH₃ functions as a weak base when dissolved in water and gases like CO₂ and H₂S function as weak acids.

As may be understood from the description above, the present invention also refers to the actual small scale production of biogas and simulation of a biogas process in laboratory scale.

The fermentation of a biodegradable feedstock is made in the digester. According to the present invention, good agitation has showed to be an important feature for the fermentation process. This may be accomplished by e.g. a mechanical agitator in the digester. Moreover, temperature control is another feature which is of interest for the digester according to the present invention. During fermentation of a feedstock different ranges of temperature may be used. When working in the mesophilic range a temperature range of 25-40°C is normally used for this kind of bacteria, normally about 35°C. In the thermophilic range, the temperature is normally held at above 45°C, normally at about 55°C, and for psycrophilic conditions, which is not often used, the temperature is above 20°C.

As mentioned above, biogas is produced in the fermentation process, the biogas being a gas mixture of biomethane, carbon dioxide, hydrogen sulphide (H₂S) and probably also small amounts of ammonium and perhaps even hydrogen. The fermentation, when biogas is produced or the actual produced biogas mixture may be analysed or measured in at least one additional measuring device or sensor. Different intermediate products during the fermentation may be of interest to measure. Moreover, the pH value, the content of VFA (volatile fatty acids) and of course methane content may also be of interest to measure during the fermentation. Moreover, a GC may be used to analyze the composition of the produced biogas from the digester. After the fermentation and optional flowing of the produced biogas through an additional measuring device or sensor intended for measuring gas composition, the biogas mixture is flowed to at least one measuring device where the actual flow of the biogas mixture is measured.

According to the present invention it is also possible to measure the actual biomethane mass flow in a biogas produced according to above.

The fixation of other gases than biomethane may be made in different ways according to the present invention. For chemical fixation of CO₂ and H₂S this may be accomplished by means of alkali metal hydroxides. Therefore, according to one specific embodiment of the present invention, the at least one container for fixation of other gases than biomethane gas contains at least one alkali metal hydroxide solution. An indicator for the hydroxide concentration in the solution may also be use to ensure sufficiently high concentration of [OH⁻]. The indicator is provided as an aid to be able to easily notice, such as by a colour change of the solution, when the hydroxide concentration is too low. Suitable indicators are well known on the market today, such as known indicators measuring the pH of the solution. Suitable alkali metal hydroxides according to the present invention are e.g. NaOH and/or KOH. With reference to the moderate condition used according to the present invention, when NaOH is used for the fixation of CO₂, the following simple acid-base chemical reaction occurs:

H₂O + CO₂ + NaOH → NaHCO₃ + H₂O

This chemical reaction is irreversible and efficient. However, another possible product can be the salt Na₂CO₃ which is produced if a 1:2 mole ratio of CO₂ and NaOH is used. The reaction from NaHCO₃ to Na₂CO₃ is:

2 NaHCO₃ → Na₂CO₃ + H₂O + CO₂

NaOH and CO₂ can be regenerated by decomposition reaction under high temperature through the following reactions:

2 NaHCO₃ (solid) → Na₂CO₃ (solid) + H₂O + CO₂ (gas) (at 200°C)

Na₂CO₃ (solid) → Na₂O (solid) + CO₂ (gas) (at 1000°C or above)

Na₂O (solid) + H₂O (liquid) → 2NaOH (liquid)

In other words, if extremely high temperatures are applied to NaHCO₃ and Na₂CO₃ in solid form, CO₂ (gas) will be released, which is undesirable according to the present invention. In particular, the conversion from Na₂CO₃ to Na₂O is difficult reaction and not of any practical use for laboratory application. Therefore, moderate conditions are important for the chemical irreversible fixation.

As mentioned above, the wet space containing the at least one liquid displacement gas flow measuring device is a liquid bath. This liquid bath normally is some kind of aqueous solution. Different components besides water may, however, be provided in the liquid bath. Therefore, according to one specific embodiment of the present invention, the wet space is a liquid bath containing at least one of the components chosen from the group consisting of water, an acid, a cleaning agent, an aqueous based solution and an organic solvent. According to the present invention, the choice of the liquid bath should be made so that the target gas component, such as methane, has a low dissolvability and is chemical inert to the liquid bath.

An acid may be provided in a liquid bath for fixation of ammonium in the biomethane gas flow, which ammonium is not fixated in the fixation of other gases than methane if this fixation is made by chemical fixation with an alkali metal hydroxide. This may be accomplished in an additional fixation container provided after a first container for chemical fixation. Therefore, according to one specific embodiment of the present invention, at least one additional "acid reacting gases" fixating container containing at least one acid in solution is provided after and in connection with the at least one container for chemical irreversible fixation of other gases than biomethane gas, the other gases being at least CO₂ and probably additionally small amounts of H₂S. This specific embodiment implies an additional fixation after the chemical fixation of CO₂ and H₂S. As said, NH₃ is a gas which may be fixated in this way. The fixation of NH₃ may be made by acid solution in view of the fact that NH₃ functions as a weak base in e.g. water solution. Therefore, according to one specific embodiment of the present invention, the at least one NH₃ fixating container contains at least one acid in solution.

EP 2009080 A1 discloses a methane separation method, which at least includes: mixing the biogas and an absorbing liquid that absorbs carbon dioxide in a mixer so as to form a mixed fluid of a gas-liquid mixed phase; introducing the mixed fluid into a first gas/liquid separator so as to separate the mixed fluid through gas/liquid separation into methane and a CO₂-absorbed liquid formed due to an absorption of the carbon dioxide by the absorbing liquid; recovering methane separated in the first gas/liquid separator; and supplying the CO₂-absorbed liquid through a supply port of a membrane module comprised of a container and a plurality of hollow fiber permeable membranes built therein to inside of the membranes so as to make the CO₂-absorbed liquid permeate the permeable membranes, and lowering a pressure outside the permeable membranes to a level lower than that inside the permeable membranes.

EP 2009080 A1 differs fundamentally from the CO₂ fixation step of the present invention. Firstly, membrane technology is used according to EP 2009080 A1. Secondly, according to EP 2009080 A1 biogas is mixed with an absorbing liquid which absorbs CO₂ in a mixer to form a gas-liquid mixed phase. This phase is fed into a separator to separate gas and liquid. The liquid phase containing the CO₂ is fed to a membrane module after which CO₂ may be released and absorbing liquid may be recovered. The present invention, however, discloses a system setup and method wherein CO₂ is actually fixated, such as by irreversible chemical reaction under moderate condition and as such does not need any membrane technology. According to EP 2009080 A1, however, diethanolamine is used proving that an absorption and not an irreversible chemical fixation is made.

Furthermore, JP 2008255209 A discloses a gas stripping method for concentrating methane gas from a biogas generated by anaerobic fermentation of organic waste. The methane is based on the principle of solubility difference among CH₄, CO₂ and H₂S in water. The biogas is passed through a liquid (water) where carbon dioxide is dissolved in the liquid. The biogas containing the methane passes through the liquid without being dissolved and is thereafter recovered for measurement. JP 2008255209 A also differs fundamentally from the present invention as no chemical fixation step is used according to JP 2008255209 A. According to JP 2008255209, components contained in the biogas, such as CH₄ and H₂S are easily dissolved in water due to their high solubility, and this is a method not being nearly as efficient as the method disclosed according to the present invention.

Moreover, today there exist different kinds of measuring devices working by the principle of liquid displacement, such as for use when measuring e.g. biogas flows, e.g. in the anaerobic biodegradation process. In the anaerobic biodegradation process, gas flow rate and methane content are key parameters for evaluating the process performance. In laboratory scale experiments, the bioreactor volume is usually quite small, often only a few litres. The biogas production is also low, especially during the startup period, often a few millilitres per hour. Measuring such a low flow rate of biogas precisely is therefore not an easy task. The commercially available gas flow meters are usually not suitable for measuring such a small amount of gas with low flow rates. To solve this practical problem, several gas-measuring systems have been devised. Most of these systems are based on the principle of liquid displacement. The volume of a gas sample immersed in a fluid is determined by measuring the volume of the displaced fluid. Although there are gas flow meters being reported and/or commercialized based on the liquid displacement technique and pressure analysis technique, the design and construction of these flow meter are still too complicate. As a result, cost for these meters is too high which makes it difficult for widely implementation. Moreover, one of the today known approaches combine MilliGascounter® from Ritter (DE4006508) with near-infra-red methane sensors from BlueSens for on-line detection of methane production. The second one is an apparatus of optical bubble counter from Challenge Technology (US patent 5,092,181) for raw biogas flow measurement. The costs for these system setups are high. Since numbers batch tests often are needed to be carried out at the same time, these two known approaches will end up with a rather high instrument cost. Although both approaches aim for less labour-intensive test and better data quality, the cost of equipments is still too high to be widely equipped in both industry and academic research institutes. The proposed automated methane potential test system (AMPTS) technology according to the present invention will also solve this problem by a novel design of wet gas flow meter array and data acquisition system that can measure multi-channels of ultra low flow of methane gas simultaneously with high precision and very low cost.

Furthermore, a measuring device is disclosed in US patent 5,325,725, which document discloses a measuring cup, mounted upside down on a pivot. The device has means for guiding gas to a position under the cup, so that gas accumulates in the cup. When sufficient gas is gathered under the cup, the combined buoyancy of the cup and gas will cause the cup to rotate whereby a predetermined amount of gas, all or only a portion of the gas, will be released from the cup to an outlet.

A potential drawback with the device disclosed in US patent 5,325,725 is that the device does not provide enough accuracy. Firstly, the design of the measuring cup is such that it does not respond to a sufficiently small amount of excess gas. Secondly, simultaneous release of all gas is not specifically promoted since the design is such that partial release of gas is just as satisfactory, as regards the use of the device.

Moreover, in US 20040086608 A1 there is disclosed a method and apparatus for monitoring a liquid undergoing anaerobic fermentation in a vessel. The apparatus comprises an airlock containing a fluid for sealing the vessel and an electrical circuit operatively arranged to pass a current through the fluid to detect passages of bubbles through the airlock. US 20040086608 A1 is related to fermentation for alcohol production and not for the preparation of biogas. Moreover, according to US 20040086608 A1, the gas flow of CO₂ is measured to be able to predict the amount of alcohol produced.

According to the present invention, any gas flow measuring device may be used in the system setup. However, a liquid displacement gas flow measuring device is preferred. Therefore, according to one specific embodiment of the present invention, said at least one gas flow measuring device is a liquid displacement measuring device which is immersed in a wet space. Thus, in this case the measuring device(s) is immersed in a wet space with the inside of the gas compartment facing towards the bottom of the wet space container, so that the gas bubbles flowing out from the gas inflow will be collected in the gas compartment until it is overfull and pivoted upwards.

The design of such a gas flow measuring device working by the principle of liquid displacement may vary, but a preferred design is described below. According to one embodiment of the invention, said at least one gas flow measuring device (flow cell) is a liquid displacement measuring device having a gas compartment with one gas accumulating end and one lifting end and wherein gas storing capacity of the inside of the gas compartment is larger at the gas accumulating end than at the lifting end. Such a design preferably enables the measuring device to operate based on leverage effect which is important to ensure a high gas measuring accuracy of the present invention.
In this case the leverage effect implies that when the geometric gas collecting point moves further and further from the gas accumulating end to the lifting end during a gas filling cycle, the effect of the lifting force is getting higher at the end of a filling stage until the gas compartment means finally pivots upwards when the lifting force is larger than the down-pressing force at the lifting end. Thereby all of the accumulated gas in the gas compartment is released and the gas compartment means pivots back to its initial standby position. To accomplish this, the flow cell also has a holding means having a pivoting element enabling the gas compartment means to pivot upwards and back to its initial standby position.

Moreover, other possible design features which may be preferred according to the invention is a gas compartment where the gas accumulating end has a higher vertical position than the lifting end at the initial standby position, the initial standby position being the position before the gas compartment has been forced to pivot upwards created by gas inside of the compartment. Furthermore, the gas compartment may have a semi-tubular or triangular cross section perpendicular to a longitudinal direction of the gas compartment, which shapes may be preferable to ensure effective leverage effect. According to another specific embodiment, the gas compartment defines a geometrical bottom surface of the gas compartment which is substantially rectangular or quadratic. According to this specific embodiment, the actual physical bottom of the gas compartment means is parallel in relation to the bottom of the vessel containing the liquid bath and hence base plate, if provided, when the flow cell is in its initial standby position. Moreover, the actual physical bottom of the gas compartment may also be integrated with the bottom of the vessel so that they in fact share the same bottom.

Moreover, the gas flow measuring device preferably has at least one sensor means provided to generate a signal and/or change the state of a signal when the gas compartment is not in its initial standby position. The signal and/or the change the state of a signal is generated when the gas compartment is pivoting upwards until it has released the contained gas and has pivoted back to its initial standby position. This pivoting cycle is made extremely quickly. As such the gas flow may be recorded in a computer. On example of a sensor means is a magnetic sensor means.

The gas compartment may be defined as having a geometrical physical volume and an active volume. The geometric physical volume is the actual volume of the inner space of the gas compartment. For one cell or compartment this volume is predefined and cannot be adjusted other than by producing a new cell having another geometric physical volume of its gas compartment. The active volume, however, of the gas compartment is the actual volume needed for pivoting the cell from its initial standby position. According to the invention, the liquid displacement measuring device has means for adjusting the active volume of the gas compartment. According to one specific embodiment, the means for adjusting the active volume is located on top of the gas compartment. Moreover, it is important to understand that the flow cell may have fixed physical volume as well as fixed active volume.

As may be understood from above, there may be several gas flow measuring devices operating simultaneously. Therefore, according to one specific embodiment, said at least one gas flow measuring device is a measuring device system comprising at least two gas flow measuring devices. These cells or gas flow devices work totally alone, but when having many gas inflows from different containers it is of course of interest to provide a cell array of many cells according to the invention. Such a measuring device system is in the following also referred to as a flow cells array.

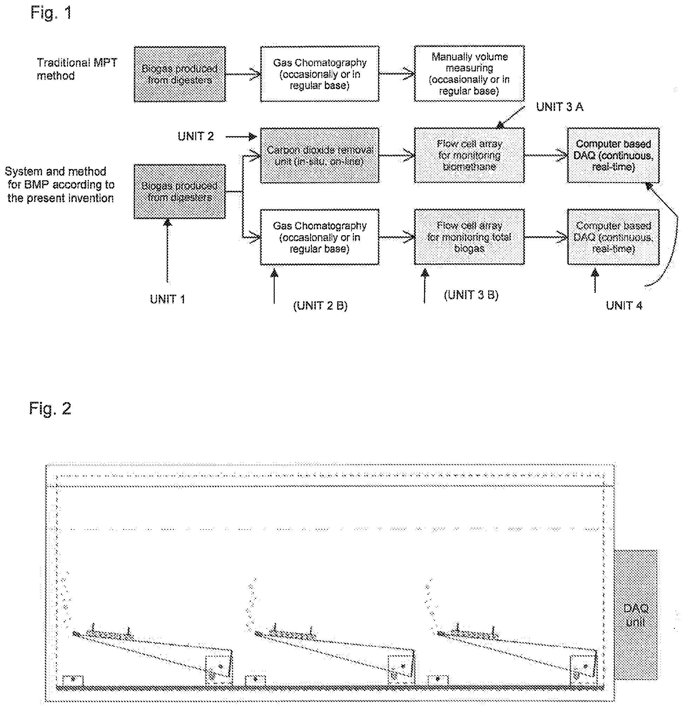

The measuring device disclosed according to the present invention finds use in many different technical areas. It can be used to build flow cell array (multi-flow cell arrangement, see Fig. 2) and used for BMP test. Moreover, the measuring device can be used as a standalone device to provide on-line, real-time monitoring of biogas production from small-scale biogas digesters.

According to the present invention there is also provided a method for measuring the biological methane potential of a biosample, the method comprising:
- loading a feedstock to at least one digester with continuously good agitation;
- anaerobic fermentation in the at least one digester;
- flowing the produced biogas to at least one container for chemical irreversible fixation where other gases than biomethane gas, the other gases being at least CO₂, are fixated; and
- flowing the biomethane gas to at least one gas flow measuring device for measurement of the biomethane gas flow.

The method of the present invention is defined in claim 7.

According to a further aspect of the present invention there is provided a use of the inventive system setup for carrying out an automated biological methane potential (BMP) test on a biosample. The use of the present invention is defined in claim 6.

### Detailed description of the figures

Below, the drawing is described in more detail.

Fig. 1 is an illustration of a process for an automated BMP test according to the present invention. Below, a description is made with reference to AMPTS according to the present invention, and also with reference to fig. 1.

AMPTS follows the same measuring principle as the conversational BMP test which makes the analysis result fully comparable with its standard method. However, the apparatus makes the analysis and data recording fully automatic during the long incubating period, which significantly reduces the time- and labour-demand for carrying out the analysis. Moreover, much high data quality can be obtained which can be used to extract kinetic information of the degradation process. This will be in turn beneficial for a much better understanding of the degradation dynamic behaviour of specific biomass, and further beneficial for a better process operation.

The instrument setup can be divided into three units (see fig. 1). In the first unit (unit 1), which is referred to above as the digester but can also be called a sample incubator, a number of vials containing small amount of samples with anaerobic inoculums are incubated under desired incubation temperature. The media in each vial is well-mixed by a slow rotating agitator in-house developed for this automated BMP test application. Biogas is then continuous produced which used to indicate the biomethanation activity inside each vial. In the second unit (CO₂-fixing unit, unit 2), biogas produced from each vial goes through an individual vial contain alkali solution, such as e.g. 2 M NaOH or KOH. As mentioned, several gas fractions, such as CO₂ and H₂S, will be removed due to related chemical reactions, and CH₄ is allowed to pass through the alkali solution without change. A pH indicator is added into each vial so the pH level of the solution can be well monitored in order to ensure sufficient high [OH⁻] concentration for fixing CO₂ and H₂S.

As mentioned above, unit 2 may also be a traditional other measuring device, such as a GC or something else (referred to as possible Unit 2 B in fig. 1), or no such extra measuring device or sensor at all, if one would like to measure the total biogas flow instead of the biomethane content or flow. The unit 2, i.e. the carbon dioxide fixation or removal unit, is provided to make sure that the flow content from that unit mainly contains biomethane.

In the final third unit (a gas monitoring unit, unit 3), CH₄ gas released from the second unit is analyzed using gas meter with multi-flow cell arrangement, i.e. a measuring device or a measuring device system according to the present invention. As may be understood from above, if the produced biogas from the digester goes directly to a measuring device or measuring device system according to the present invention or only via some kind of traditional measuring device or sensor, like a GC or near infrared methane sensors, and not via a carbon dioxide fixation unit, the total biogas flow instead of the biomethane flow may be measured in the measuring device or flow cell array according to the present invention. These two alternatives are showed as unit 3 A and 3 B, respectively. It is also of course possible to use traditional measuring and sensor equipment additionally although the carbon dioxide fixation route according to the present invention is used.

An in-house developed software program is then used together with the measuring device or the flow cells (measuring device system) in order to record, display and calculate data, as well as analyze the result. This is showed as the DAQ unit (unit 4 according to fig. 1), which may be a computer bases recording made continuously and in real-time.

Fig. 2 is an illustration of one example of a measuring device system or flow cells array according to the present invention. The measuring device system in this case comprises three measuring devices. The measuring devices in this case are liquid displacement measuring devices having gas compartments with one gas accumulating end and one lifting end and wherein gas storing capacity of the inside of the gas compartment is larger at the gas accumulating end than at the lifting end. Moreover, the gas accumulating end has a higher vertical position than the lifting end at the initial standby position. Furthermore, the gas compartments have triangular cross sections perpendicular to a longitudinal direction of the gas compartment. Moreover, the gas flow measuring devices have magnetic sensor means so that the gas flows may be recorded on a DAQ unit, which is also shown in fig. 2. Furthermore, the measuring devices have means for adjusting the active volume of the gas compartments which means for adjusting is located on top of the gas compartments. These cells of the measuring devices should, however, only be seen as one possible example according to the present invention.

### Conclusions

According to the present invention, there is also disclosed a system for producing/simulating/measuring a biogas flow in different ways, such as producing and simulating biogas from a feedstock, then either measuring the biogas, optionally after some additional measuring or sensoring, or first separating biomethane gas from the biogas flow by fixating other gas components, such as carbon dioxide, hydrogen sulphide and perhaps even ammonium, and then just measuring the actual biomethane flow. There are many advantages with the system and method according to the present invention. Some of these advantages are summarised below:
- Simple construction;
- Modularized instrument design for all instrument components;
- No expensive techniques and instruments such as GC and optical measurement are needed;
- Direct and continuous measurement of formed methane;
- Flexible design: analysis can be carried out by combining unit 1, 2 and 3. However, if monitoring of total biogas is needed, it is possible to couple unit 1 and 3 directly. If GC or other gas sensors (such as near infrared methane sensor) is available, methane content or gas composition can still be analyzed even if unit 2 is not used.
- Utilization of a slow rotating agitator has huge advantage in comparison to no mixing or other types of mixing commonly used for the conversational BMP test, such as water shaking bath and magnetic stirrer. The use of slow rotating agitator can minimize analysis disturbance due to uneven release of biogas or poor mass transfer. This will make the analysis result truly reflect the biodegradability of target sample under anaerobic condition. Furthermore, a rotating agitator provides slow and strong mixing effect that allows handling samples with very high solid content. This is impossible to achieve by water shaking bath and magnetic stirrer.
- By use of alkali solution to remove CO₂ and H₂S, BMP test becomes feasible to carry out without expensive analytical instruments, such as GC and gas sensors.- Capable to provide continuous monitoring of ultra small gas flow, data analysis and recording. This will insure not only much more frequent data acquisition, but also high data quality to meet the demand for studying the dynamic information of degradation process.

## Claims

1. System setup for automated measuring biomethane gas in a biogas flow, the system setup comprising:
- at least one digester
- at least one container for chemical fixation of other gases than biomethane gas, the other gases being at least CO₂, wherein the chemical fixation is based on irreversible reaction(s); and
- at least one direct gas flow measuring device;
- a data acquisition system (DAQ unit) configured for continuous and in real-time data recording and analyzing of the gas flow measurements;
wherein the at least one container for chemical irreversible fixation is connected to said at least one gas flow measuring device;
wherein said at least one gas flow measuring device is a liquid displacement measuring device having a triangular gas compartment,
wherein the liquid displacement measuring device is operating based on leverage effect,
wherein said at least one gas flow measuring device is immersed in a wet space, and wherein
the liquid displacement measuring device has at least one sensor means provided to generate a signal and/or change the state of a signal when the gas compartment is not in its initial standby position, and
wherein said liquid displacement device has means for adjusting the active volume of the gas compartment, the active volume being the actual volume needed for pivoting the compartment from its initial standby position.

2. System setup according to claim 1, wherein said at least one gas flow measuring device is a measuring device system comprising at least two gas flow measuring devices.

3. System setup according to anyone of claims 1-2, wherein the liquid displacement measuring device is immersed in a wet space which is a liquid bath containing at least one of the components chosen from the group consisting of water, an acid, a cleaning agent, an aqueous based solution and an organic solvent.

4. System setup according to anyone of claims 1-3, wherein the at least one container for chemical irreversible fixation of other gases than biomethane gas contains at least one alkali metal hydroxide solution.

5. System setup according to anyone of claims 1-4, wherein at least one additional "acid reacting gases" fixating container containing at least one acid in solution is provided after and in connection with the at least one container for chemical irreversible fixation of other gases than biomethane gas, the other gases being at least CO2.

6. Use of a system setup according to anyone of claims 1-5 for carrying out an automated biological methane potential test on a biosample.

7. Method for measuring the biological methane potential of a biosample, the method comprising:
- providing a system as defined in claim 1,
- loading a feedstock to the at least one digester with continuous agitation;
- anaerobic fermentation of said feedstock in the at least one digester;
- flowing the produced biogas to the at least one container for chemical irreversible fixation where other gases than biomethane gas are irreversibly fixated, the other gases being at least CO2;
- flowing the biomethane gas to the at least one gas flow measuring device for measurement of the biomethane gas flow;
- measuring the biomethane gas flow;
- recording and analyzing formed methane continuously and in real-time.

## Patentansprüche

1. Systemaufbau zur automatisierten Messung von Biomethangas in einem Biogas-Strom, wobei der Systemaufbau umfasst:
- wenigstens einen Digestor,
- wenigstens einen Behälter zum chemischen Fixieren anderer Gase als Biomethangas, wobei die anderen Gase wenigstens CO₂ sind, wobei das chemische Fixieren auf der Grundlage irreversibler Reaktion(en) steht; und
- wenigstens eine direkte Gasflussmessvorrichtung;
- ein Datenaufnahmesystem (DAQ-Einheit), gestaltet zur kontinuierlichen und Echtzeit-Datenaufzeichnung und -Analyse der Glasflussmessungen;
wobei der wenigstens eine Behälter für chemisch irreversibles Fixieren mit der wenigstens einen Glasflussmessvorrichtung verbunden ist;
wobei die wenigstens eine Glasflussmessvorrichtung eine Flüssigkeitsverdrängungs-Messvorrichtung mit einem dreieckigen Gasraum ist,
wobei die Flüssigkeitsverdrängungs-Messvorrichtung auf der Grundlage von Hebelwirkung arbeitet,
wobei die wenigstens eine Glasflussmessvorrichtung in einen Nassraum eingebettet ist und wobei die Flüssigkeitsverdrängungs-Messvorrichtung wenigstens eine Sensoreinrichtung aufweist, die bereitgestellt ist, um ein Signal zu erzeugen und/oder den Zustand eines Signals zu verändern, wenn sich der Gasraum nicht in seiner Anfangs-Bereitschaftsstellung befindet, und
wobei die Flüssigkeitsverdrängungs-Messvorrichtung eine Einrichtung zum Einstellen des aktiven Volumens des Gasraums aufweist, wobei das aktive Volumen das tatsächliche Volumen ist, das zum Schwenken der Kammer aus ihrer Anfangs-Bereitschaftsstellung erforderlich ist.

2. Systemaufbau gemäß Anspruch 1, wobei die wenigstens eine Glasflussmessvorrichtung ein Messvorrichtungssystem ist, das wenigstens zwei Glasflussmessvorrichtungen umfasst.

3. Systemaufbau gemäß einem der Ansprüche 1-2, wobei die Flüssigkeitsverdrängungs-Messvorrichtung in einen Nassraum eingebettet ist, der ein Flüssigkeitsbad ist, das wenigstens eine der Komponenten ausgewählt aus der Gruppe bestehend aus Wasser, einer Säure, einem Reinigungsmittel, einer Lösung auf Wasserbasis und einem organischen Lösungsmittel enthält.

4. Systemaufbau gemäß einem der Ansprüche 1-3, wobei der wenigstens eine Behälter für chemisch irreversibles Fixieren anderer Gase als Biomethangas wenigstens eine Alkalimetallhydroxidlösung enthält.

5. Systemaufbau gemäß einem der Ansprüche 1-4, wobei wenigstens ein zusätzlicher "Säure-reaktionsfähige Gase"-Fixierbehälter, der wenigstens eine Säure in Lösung enthält, nach und in Verbindung mit dem wenigstens einen Behälter für chemisch irreversibles Fixieren anderer Gase als Biomethangas bereitgestellt ist, wobei die anderen Gase wenigstens CO₂ sind.

6. Verwendung eines Systemaufbaus gemäß einem der Ansprüche 1-5 zum Durchführen eines automatisierten biologischen Methanpotentialtests an einer Bioprobe.

7. Verfahren zur Messung des biologischen Methanpotentials einer Bioprobe, wobei das Verfahren umfasst:
- Bereitstellen eines Systems gemäß Anspruch 1,
- Zuführen eines Einsatzmaterials zu dem wenigstens einen Digestor unter kontinuierlichem Bewegen,
- anaerobe Fermentation des Einsatzmaterials in dem wenigstens einen Digestor,
- Leiten des erzeugten Biogases zu dem wenigstens einen Behälter für chemisch irreversibles Fixieren, in dem andere Gase als Biomethangas irreversibel fixiert werden, wobei die anderen Gase CO₂ sind,
- Leiten des Biomethangases zu der wenigstens einen Glasflussmessvorrichtung zum Messen des Biomethangasflusses,
- Messen des Biomethangasflusses,
- kontinuierliches Aufzeichnen und Analysieren des gebildeten Methans in Echtzeit.

## Revendications

1. Installation de système pour la mesure automatique de gaz de méthane biologique dans un écoulement de gaz biologique, l'installation de système comprenant:
au moins un digesteur,
au moins un récipient pour la fixation chimique d'autres gaz que le gaz de méthane biologique, les autres gaz étant au moins du CO₂, dans laquelle la fixation chimique est basée sur une ou plusieurs réaction(s) irréversible(s); et
au moins un dispositif de mesure d'écoulement de gaz direct;
un système d'acquisition de données (unité DAQ) configuré de manière à enregistrer et analyser de façon continue et en temps réel des données relatives aux mesures d'écoulement de gaz;
dans laquelle ledit au moins un récipient pour la fixation chimique irréversible est connecté audit au moins un dispositif de mesure d'écoulement de gaz;
dans laquelle ledit au moins un dispositif de mesure d'écoulement de gaz est un dispositif de mesure de déplacement de liquide qui présente un compartiment de gaz triangulaire,
dans laquelle le dispositif de mesure de déplacement de liquide fonctionne sur la base d'un effet de levier,
dans laquelle ledit au moins un dispositif de mesure d'écoulement de gaz est immergé dans un espace humide, et dans laquelle le dispositif de mesure de déplacement de liquide présente au moins un moyen de capteur prévu pour générer un signal et/ou un changement d'état d'un signal lorsque le compartiment de gaz ne se trouve pas dans sa position d'attente initiale, et
dans laquelle ledit dispositif de déplacement de liquide présente des moyens pour régler le volume actif du compartiment de gaz, le volume actif étant le volume réel nécessaire pour faire pivoter le compartiment à partir de sa position d'attente initiale.

2. Installation de système selon la revendication 1, dans laquelle ledit au moins un dispositif de mesure d'écoulement de gaz est un système de dispositif de mesure comprenant au moins deux dispositifs de mesure d'écoulement de gaz.

3. Installation de système selon l'une quelconque des revendications 1 ou 2, dans laquelle le dispositif de mesure de déplacement de liquide est immergé dans un espace humide qui est un bain de liquide contenant au moins un des composants choisi dans le groupe comprenant l'eau, un acide, un agent de nettoyage, une solution à base aqueuse et un solvant organique.

4. Installation de système selon l'une quelconque des revendications 1 à 3, dans laquelle ledit au moins un récipient pour la fixation chimique irréversible d'autres gaz que le gaz de méthane biologique contient au moins une solution d'hydroxyde de métal alcalin.

5. Installation de système selon l'une quelconque des revendications 1 à 4, dans laquelle au moins un récipient supplémentaire de fixation de "gaz de réaction acides" contenant un moins un acide en solution est prévu après et en connexion avec ledit au moins un récipient pour la fixation chimique irréversible d'autres gaz que le gaz de méthane biologique, les autres gaz étant au moins du CO₂.

6. Utilisation d'une installation de système selon l'une quelconque des revendications 1 à 5 pour exécuter un test automatisé de potentiel de méthane biologique sur un échantillon biologique.

7. Procédé de mesure du potentiel de méthane biologique d'un échantillon biologique, le procédé comprenant:
la fourniture d'un système selon la revendication 1;
le chargement d'une charge d'alimentation dans ledit au moins un digesteur avec une agitation continue;
la fermentation anaérobie de ladite charge d'alimentation dans ledit au moins un digesteur;
l'écoulement du gaz biologique produit dans ledit au moins un récipient pour la fixation chimique irréversible où d'autres gaz que le gaz de méthane biologique sont fixés de façon irréversible, les autres gaz étant du CO₂;
l'écoulement du gaz de méthane biologique dans ledit au moins un dispositif de mesure d'écoulement de gaz afin de mesurer l'écoulement de gaz de méthane biologique;
la mesure de l'écoulement de gaz de méthane biologique; et
l'enregistrement et l'analyse de façon continue et en temps réel du méthane formé.
